(19) Europäisches Patentamt
European Patent Office
Office européen des brevets

(11) EP 3 897 968 B1

(12) FASCICULE DE BREVET EUROPEEN

(45) Date de publication et mention de la délivrance du brevet:
09.07.2025 Bulletin 2025/28

(21) Numéro de dépôt: 19842871.6

(22) Date de dépôt: 16.12.2019

(51) Classification Internationale des Brevets (IPC):
B01J 20/18 (2006.01)      B01J 20/28 (2006.01)
B01D 53/04 (2006.01)

(52) Classification Coopérative des Brevets (CPC):
B01J 20/183; B01D 53/04; B01J 20/186;
B01J 20/28004; B01J 20/28011; B01J 20/2803;
B01D 2253/1085; B01D 2253/304; B01D 2256/12;
B01D 2257/102; Y02C 20/10

(86) Numéro de dépôt international:
PCT/FR2019/053080

(87) Numéro de publication internationale:
WO 2020/128270 (25.06.2020 Gazette 2020/26)

(54) **MATÉRIAU AGGLOMÉRÉ ZÉOLITHIQUE, PROCÉDÉ DE PRÉPARATION ET UTILISATION POUR LA SÉPARATION NON-CRYOGÉNIQUE DE GAZ**

ZEOLITHAGGLOMERATMATERIAL, VERFAHREN ZUR HERSTELLUNG UND VERWENDUNG ZUR NICHTKRYOGENEN TRENNUNG VON GAS

ZEOLITE AGGLOMERATE MATERIAL, METHOD OF PRODUCTION, AND USE FOR THE NON-CRYOGENIC SEPARATION OF GAS

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: 21.12.2018 FR 1873871

(43) Date de publication de la demande:
27.10.2021 Bulletin 2021/43

(73) Titulaire: ARKEMA FRANCE
92800 Puteaux (FR)

(72) Inventeurs:
• ORTIZ, Guillaume
  64170 LACQ (FR)
• LUTZ, Cécile
  64170 LACQ (FR)
• PERSILLON, Quitterie
  64170 LACQ (FR)
• SZENDROVICS, Sylvie
  64170 LACQ (FR)

(56) Documents cités:
WO-A1-2018/100318      US-A1- 2012 227 584

EP 3 897 968 B1

**Description**

La présente invention est relative à des matériaux adsorbants spécifiques pour la séparation non cryogénique de gaz, plus particulièrement pour la séparation non cryogénique de gaz industriels, et plus particulièrement encore pour la séparation de l'azote par adsorption dans des flux gazeux tels que l'air ainsi que la purification de l'hydrogène par adsorption de monoxyde de carbone (CO) et/ou d'azote ($N_2$) ou encore la préparation d'oxygène de haute pureté à partir d'air.

La séparation de l'azote de mélanges de gaz est à la base de plusieurs procédés non cryogéniques industriels, parmi lesquels la production d'oxygène à partir d'air par procédé PSA (« Pressure Swing Adsorption », en langue anglaise, soit « Adsorption modulée en pression ») ou VPSA (« Vacuum and Pressure Swing Adsorption », en langue anglaise, soit « Adsorption modulée en pression et sous vide »), le procédé PSA étant l'un des plus importants.

Dans cette application, l'air est comprimé et envoyé sur une colonne d'adsorbant ayant une préférence marquée pour la molécule d'azote. On produit ainsi, pendant le cycle d'adsorption, de l'oxygène de pureté, généralement comprise entre 85% à 95%, et de l'argon. Après une certaine durée, la colonne est dépressurisée puis maintenue à pression basse, période pendant laquelle l'azote est désorbé. Une recompression est ensuite assurée au moyen d'une partie de l'oxygène produit et/ou par de l'air, puis le cycle continue. L'intérêt de ce procédé par rapport aux procédés cryogéniques réside dans la plus grande simplicité des installations et une plus grande facilité de maintenance.

La qualité de l'adsorbant utilisé reste la clé d'un procédé efficace et compétitif. La performance de l'adsorbant est liée à plusieurs facteurs, parmi lesquels on peut notamment citer la capacité d'adsorption en azote et la sélectivité entre azote et oxygène qui seront déterminantes pour dimensionner les tailles de colonne et optimiser le rendement de production (rapport entre l'oxygène produit et oxygène entré), la cinétique d'adsorption qui permettra d'optimiser la durée des cycles et d'améliorer la productivité de l'installation.

L'utilisation de tamis moléculaires comme adsorbants sélectifs de l'azote est une technologie aujourd'hui bien connue. La famille de zéolithes ayant un diamètre de pores d'au moins 0,4 nm (4 Å) est présentée par exemple dans US3140931 pour la séparation de mélanges d'oxygène et d'azote. La performance comparée des différentes formes ioniques des zéolithes est décrite dans US3140933, en particulier celle de la forme lithium présentée comme la plus efficace en termes de sélectivité. La demande WO2018100318 décrit divers matériaux adsorbants zéolithiques, à base de zéolithe LSX possédant une distribution granulométrie spécifique, pour la séparation non cryogénique de gaz industriels. La demande US20120227584 décrit quant à elle des agrégats (taille supérieure à 0,8$\mu$m) de cristaux zéolithiques (taille inférieurs à 0,3 $\mu$m) pour la séparation d'oxyde de carbone dans des flux gazeux contenant du dioxyde de carbone.

La demande FR2766476 décrit un adsorbant zéolithique amélioré pour la séparation des gaz de l'air et son procédé d'obtention. Ce document décrit un matériau adsorbant à base de zéolithe LSX comprenant du lithium, éventuellement du potassium, et à liant zéolithisé. Ce matériau adsorbant a une capacité d'adsorption d'azote supérieure ou égale à 26 cm$^3$.g$^{-1}$. Ledit matériau est fabriqué à partir d'au moins 95% de zéolithe de type LSX (ratio atomique Si/Al = 1) échangée au lithium. On s'aperçoit cependant que la résistance mécanique de ces agglomérés peut s'avérer insuffisante dans certaines applications.

Le document WO2014176002 décrit un procédé de préparation d'un adsorbant zéolithique utilisable pour séparer des composés gazeux, tels que l'oxygène et l'azote. La taille des billes de l'adsorbant zéolithique est typiquement de 1,8 mm.

La demande de brevet US20130340612 décrit la préparation et l'utilisation d'une poudre d'adsorbant, tel qu'une zéolithe, mélangée avec un liant pour former un aggloméré zéolithique sous forme de billes. L'objectif dans cette publication est d'optimiser le profil poreux afin d'optimiser l'efficacité de séparation. À cette fin, il est décrit au § [0063] que le ratio diamètre des billes/diamètre des cristaux doit être compris entre 100 et 1000, pour une structure poreuse approximativement uniforme et une bonne résistance mécanique.

L'importance actuelle des procédés de séparation non-cryogéniques de gaz industriels mettant en œuvre des matériaux adsorbants zéolithiques (dits également « tamis moléculaires ») montre que la découverte et la mise au point d'adsorbants de plus en plus performants constitue un objectif important, à la fois pour les sociétés productrices de gaz et pour les sociétés fournissant lesdits tamis moléculaires.

Un des objectifs de la présente invention est par conséquent la mise à disposition de matériaux adsorbants zéolithiques à capacité d'adsorption améliorée par rapport aux matériaux adsorbants zéolithiques existants, par exemple de type LiLSX, pour la séparation des gaz industriels, en particulier pour la séparation de l'azote et de l'oxygène, et plus particulièrement pour l'obtention d'oxygène gazeux de grande pureté pour usage médical.

Un autre objectif est d'améliorer encore l'efficacité des concentrateurs d'oxygène médical, et en particulier de miniaturiser la taille des concentrateurs, par exemple en diminuant la taille des lits d'adsorbants (« bed size » en langue anglaise). Pour améliorer l'efficacité de tels concentrateurs, une solution pourrait être par exemple de diminuer la taille des matériaux agglomérés zéolithiques qui constituent les lits d'adsorbants présents dans lesdits concentrateurs.

Il a maintenant été découvert que les objectifs précités sont atteints, en totalité ou au moins en partie grâce à la présente invention. D'autres objectifs encore apparaîtront dans la description de l'invention qui suit.

La présente invention propose ainsi de nouveaux matériaux adsorbants zéolitiques hautement capacitifs, à partir de cristaux de zéolithe LSX, contenant du lithium, pour la séparation non cryogénique des gaz industriels en (V)PSA, en particulier pour la séparation d'azote et d'oxygène ($N_2/O_2$), et tout particulièrement pour la préparation d'oxygène médical à partir d'air, ainsi que pour la préparation industrielle d'oxygène par (V)PSA.

Ainsi, et selon un premier aspect, la présente invention a pour objet un matériau aggloméré zéolithique sous forme de particule d'aggloméré zéolithique comprenant au moins une zéolithe et au moins un liant, ledit matériau aggloméré zéolithique présentant un ratio diamètre volumique moyen de ladite particule d'aggloméré zéolithique par rapport au diamètre moyen en nombre des cristaux de zéolithe inférieur ou égal à 70, et dont le diamètre volumique moyen de ladite particule d'aggloméré zéolithique est compris entre 20 $\mu$m et 400 $\mu$m, de manière préférée compris entre 50 $\mu$m et 380 $\mu$m, bornes incluses.

Le ratio diamètre volumique moyen de ladite particule d'aggloméré zéolithique par rapport au diamètre moyen en nombre des cristaux de zéolithe est généralement et avantageusement supérieur à 1, de préférence supérieur à 2, de préférence encore supérieur à 4. Selon un mode de réalisation préféré, ce ratio est compris entre 70 et 4, de préférence encore entre 70 et 5.

Le matériau aggloméré zéolitique selon l'invention comprend au moins des cristaux de zéolithe de type FAU, ledit matériau présentant un rapport atomique Si/Al compris entre 1 et 2,5, de préférence entre 1 et 2,0, de préférence encore entre 1 et 1,8, et de manière tout à fait préférée, entre 1 et 1,6, mesuré par fluorescence X, avec une incertitude de mesure de $\pm$ 0,05.

Selon un mode de réalisation préféré, le matériau aggloméré zéolitique selon l'invention comprend des cristaux de zéolithe de type FAU de rapport atomique Si/Al compris entre 1,00 et 1,50, de préférence entre 1,00 et 1,40, de préférence encore entre 1,00 et 1,15, bornes incluses.

Avantageusement, le matériau aggloméré zéolitique selon l'invention comprend des cristaux de zéolithe de type FAU, et plus particulièrement de zéolithe de type LSX ou « Low Silica X » en langue anglaise, c'est-à-dire de zéolithe de ratio atomique Si/Al égal à 1,00 $\pm$ 0,05. Ces cristaux de zéolithe sont bien connus de l'homme du métier et peuvent être préparés selon tout moyen connu et par exemple en reprenant et/ou adaptant des modes opératoires décrits dans la demande FR2925478.

Selon encore un autre mode de réalisation préféré, le matériau aggloméré zéolithique de l'invention présente une teneur en lithium, exprimée en poids de $Li_2O$, comprise entre 8,0% et 12,0% en poids, bornes incluses, de préférence entre 9,0% et 12,0%, bornes incluses, de préférence encore entre 10% et 12,0% en poids, bornes incluses, par rapport au poids total du matériau aggloméré zéolithique.

Selon l'invention, les cristaux de zéolithe mis en œuvre dans le matériau aggloméré zéolithique de la présente invention présentent un diamètre moyen en nombre ($d_{50}$) compris entre 5,0 $\mu$m et 20,0 $\mu$m, de préférence compris entre 5,0 $\mu$m et 15,0 $\mu$m.

Le diamètre moyen des cristaux peut être modulé notamment en fonction des conditions opératoires de synthèse, et par exemple, par modulation d'un ou plusieurs des paramètres suivants : composition du milieu de synthèse, taux de cisaillement qui lui est appliqué, ajout en quantités plus ou moins importantes de semences dans le milieu de synthèse, température du milieu de synthèse, durée de la synthèse et autres, selon des techniques bien connues de l'homme du métier.

Dans un mode de réalisation avantageux de la présente invention, le matériau zéolithique présente une phase non zéolithique (PNZ), telle que $0 < PNZ \leq 25\%$, de préférence $0 < PNZ \leq 20\%$, de préférence encore $0 < PNZ \leq 15\%$, avantageusement $0 < PNZ \leq 10\%$, encore plus avantageusement $0 < PNZ \leq 8\%$, mesurée par diffraction des rayons X (DRX), en poids par rapport au poids total du matériau aggloméré zéolithique.

Dans un mode de réalisation, le matériau aggloméré zéolithique utilisable dans la présente invention présente une quantité de phase non zéolithique PNZ, telle que $0 < PNZ \leq 7\%$, de préférence encore $0,5\% \leq PNZ \leq 5\%$, mesurée par DRX, en poids par rapport au poids total du matériau aggloméré zéolithique.

Le matériau aggloméré zéolithique selon l'invention se présente sous la forme de particules solides de taille, exprimée en diamètre volumique moyen, le plus souvent comprise entre 20 $\mu$m et 400 $\mu$m, et de manière tout à fait préférée comprise entre 50 $\mu$m et 380 $\mu$m, bornes incluses.

Le matériau aggloméré zéolithique s'obtient selon tout procédé d'agglomération et de mise en forme connu de l'homme du métier et par exemple, de manière limitative grâce à des procédés de mise en forme par agitation et collisions, par exemple grâce à des tambours granulateurs, à des assiettes granulatrices, fonctionnant par exemple en continu, ou à des mélangeurs granulateurs exploités en général en discontinu, appelés parfois aussi « nodulateurs », ou encore grâce à des procédés de mise en forme par nébulisation et séchage tels que des atomiseurs. Ces différents traitements de mise en forme permettent d'atteindre les formes et tailles souhaitées. Il doit être compris que ces traitements peuvent être éventuellement suivis de traitements complémentaires de tamisage pour obtenir encore affiner la taille visée.

Le matériau aggloméré zéolithique de la présente invention présente en outre une masse volumique apparente généralement comprise entre 0,50 kg m$^{-3}$ et 0,80 kg m$^{-3}$, de préférence comprise entre 0,55 kg m$^{-3}$ et 0,75 kg m$^{-3}$, de préférence encore comprise entre 0,60 kg m$^{-3}$ et 0,70 kg m$^{-3}$.

Ledit matériau aggloméré zéolithique de la présente invention se caractérise également par une très bonne résistance mécanique, et en particulier une très bonne résistance à l'écrasement en lit (REL) mesurée selon la norme ASTM 7084-04, le plus souvent supérieure à 1,5 MPa, et généralement supérieure à 2,0 MPa, de préférence supérieure à 2,5 MPa.

Dans un mode de réalisation tout particulièrement préféré de la présente invention, le matériau aggloméré zéolithique présente une, deux ou plusieurs, ou encore toutes, les caractéristiques des modes de réalisation exposés ci-dessus. Le volume total des macropores et mésopores du matériau aggloméré zéolithique utilisable dans le cadre de la présente invention, mesuré par intrusion de mercure, est avantageusement compris entre 0,15 cm$^3$ g$^{-1}$ et 0,5 cm$^3$ g$^{-1}$, de préférence compris entre 0,20 cm$^3$ g$^{-1}$ et 0,40 cm$^3$ g$^{-1}$ et de manière très préférée compris entre 0,20 cm$^3$ g$^{-1}$ et 0,35 cm$^3$ g$^{-1}$, les mesures étant réalisées sur le matériau aggloméré échangé à au moins 95% au lithium.

Lorsque le matériau aggloméré zéolithique de la présente invention contient plusieurs types de zéolithes différents, ces différents types de zéolithes sont déterminés par DRX. La quantité de chaque type de zéolithes est également mesurée par DRX et est exprimée en % en poids par rapport au poids total du matériau adsorbant.

En corollaire, dans la présente invention, le terme « phase non zéolithique » (ou « PNZ ») désigne toute phase présente dans le matériau aggloméré zéolithique, autre que la ou les zéolithe(s) définie(s) ci-dessus, dénommé « phase zéolithique » ou « PZ ». La quantité de phase non zéolithique est exprimée par le complément à 100% de la phase zéolithique du matériau aggloméré, autrement dit :

$$\%PNZ = 100 - \%PZ,$$

où %PNZ représente le pourcentage en poids de PNZ et %PZ le pourcentage en poids de phase zéolithique (PZ), par rapport au poids total du matériau aggloméré. Selon un aspect tout particulièrement préféré, le matériau aggloméré zéolithique de l'invention peut par exemple être :

- un matériau sous forme de billes de 400 $\mu$m de diamètre volumique moyen, comprenant une zéolithe de type LSX de diamètre moyen en nombre égal à 5 $\mu$m, correspondant à un ratio diamètre moyen en volume de la particule d'adsorbant par rapport au diamètre moyen en nombre des cristaux de zéolithe égal à 80 ; ou encore
- un matériau sous forme de billes de 350 $\mu$m de diamètre volumique moyen, comprenant une zéolithe de type LSX de diamètre moyen en nombre égal à 5 $\mu$m correspondant à un ratio diamètre moyen en volume de la particule d'adsorbant par rapport au diamètre moyen en nombre des cristaux de zéolithe égal à 70 ; ou encore
- un matériau sous forme de billes de 250 $\mu$m de diamètre volumique moyen, comprenant une zéolithe de type LSX de diamètre moyen en nombre égal à 10 $\mu$m correspondant à un ratio diamètre moyen en volume de la particule d'adsorbant par rapport au diamètre moyen en nombre des cristaux de zéolithe égal à 25 ; ou encore
- un matériau sous forme de billes de 300 $\mu$m de diamètre volumique moyen, comprenant une zéolithe de type LSX de diamètre moyen en nombre égal à 6 $\mu$m correspondant à un ratio diamètre moyen en volume de la particule d'adsorbant par rapport au diamètre moyen en nombre des cristaux de zéolithe égal à 50 ; ou encore
- un matériau sous forme de billes de 150 $\mu$m de diamètre volumique moyen, comprenant une zéolithe de type LSX de diamètre moyen en nombre égal à 9 $\mu$m correspondant à un ratio diamètre moyen en volume de la particule d'adsorbant par rapport au diamètre moyen en nombre des cristaux de zéolithe égal à 17 ; ou encore
- un matériau sous forme de billes de 350 $\mu$m de diamètre volumique moyen, comprenant une zéolithe de type LSX de diamètre moyen en nombre égal à 11 $\mu$m correspondant à un ratio diamètre moyen en volume de la particule d'adsorbant par rapport au diamètre moyen en nombre des cristaux de zéolithe égal à 32 ; sans que cette liste soit limitative.

L'invention concerne également un procédé de préparation du matériau aggloméré zéolithique selon l'invention qui comprend les étapes suivantes :

a) agglomération de cristaux de zéolithe, avec un liant d'agglomération, contenant de préférence au moins 80% en poids d'argile(s), mise en forme, séchage et calcination,
b) zéolithisation éventuelle d'au moins une partie du liant,
c) échange cationique,
d) séchage éventuel et
e) activation du matériau aggloméré zéolithique obtenu.

Dans le procédé de préparation ci-dessus, toutes les quantités indiquées sont exprimées en équivalents calcinés, c'est-à-dire en poids ou en pourcentage massique, soustraction faite de la perte au feu (PAF) mesurée sur chaque ingrédient introduit. Il est également possible d'utiliser dans l'étape a) des cristaux de zéolithe au moins partiellement échangée aux terres rares, comme décrit par exemple dans le brevet US5464467.

L'étape d'agglomération est une technique maintenant bien connue et est réalisé ici par exemple par agglomération de cristaux de zéolithe avec un liant d'agglomération, de préférence une argile zéolithisable et/ou une argile non zéolithisable. La mise en forme à l'étape a) est réalisée selon les techniques bien connues de l'homme de l'art.

Comme indiqué précédemment, le liant d'agglomération utilisé à l'étape a) peut être de tout type connu de l'homme du métier et contient de préférence au moins 80% en poids d'argile(s) par rapport au poids total du liant d'agglomération. Selon un mode de réalisation de l'invention, ladite argile peut comprendre au moins une argile zéolithisable, c'est-à-dire susceptible d'être transformée en zéolithe selon tout moyen bien connu de l'homme du métier, par exemple par digestion caustique.

Par « argile(s) zéolithisable(s) », on entend une argile ou un mélange d'argiles susceptible(s) d'être transformée(s) en matière zéolithique par action d'une solution basique alcaline, selon des techniques maintenant bien connues de l'homme du métier.

Les argiles qui peuvent être utilisées au titre de liant d'agglomération appartiennent typiquement à la famille des kaolinites, des halloysites, des nacrites, des dickites, des kaolins et/ou des métakaolins, argiles auxquelles on peut également ajouter une source de silice.

Il est également possible d'incorporer un ou plusieurs autres types d'argiles non zéolithisables, telles que par exemple et de manière non limitative des argiles choisies parmi attapulgites, sépiolites, bentonites, montmorillonites, et autres.

Il est en outre possible, pendant l'étape a) d'agglomération, d'incorporer un ou plusieurs additif(s) organique(s), notamment dans le but de faciliter la mise en forme et/ou de conférer des propriétés particulières au matériau aggloméré, telles que tenue mécanique, profils poreux, et autres. Ces additifs sont bien connus de l'homme du métier et peuvent être incorporés à des teneurs comprises entre 0 et 5% en poids par rapport au poids total dudit produit obtenu à l'issue de l'étape a).

L'opération de séchage de l'étape a) est réalisée de manière classique, de préférence à une température généralement comprise entre 50°C et 200°C, par exemple à environ 120°C. La calcination de l'étape a) est également réalisée selon des procédés connus et a pour but de réduire la teneur en eau et de conférer une tenue mécanique à l'aggloméré par cuisson du liant d'agglomération. On procède en général par calcination à des températures supérieures à 200°C, typiquement comprises entre 250°C et 700°C, préférentiellement entre 300°C et 650°C, généralement sous balayage gazeux oxydant et/ou inerte, avec notamment des gaz tels que l'oxygène, l'azote, l'air, un air sec et/ou décarbonaté, un air appauvri en oxygène, éventuellement sec et/ou décarbonaté. Cette calcination est conduite pendant quelques heures, par exemple entre 2 heures et 6 heures.

L'éventuelle étape de zéolithisation peut être effectuée par immersion de l'aggloméré dans une solution basique alcaline, en général aqueuse, par exemple une solution aqueuse d'hydroxyde de sodium et/ou d'hydroxyde de potassium, dont la concentration est de préférence supérieure à 0,5 M. Ladite concentration est généralement inférieure à 5 M, de préférence inférieure à 4 M, avantageusement inférieure à 3 M. La zéolithisation s'opère de préférence à chaud (température supérieure à la température ambiante) typiquement à des températures de l'ordre de 80°C à 100°C, afin d'améliorer la cinétique du processus et ainsi réduire les durées d'immersion à moins de 8 heures. On ne sortirait cependant pas du cadre de l'invention en opérant à des températures plus basses et des durées d'immersion plus longues. On ne sortirait également pas du cadre de l'invention en ajoutant, lors de cette étape de zéolithisation, une source de silice liquide ou solide dans la solution alcaline basique, par exemple du silicate de sodium ou de la silice dissoute.

Grâce à l'étape b) de zéolithisation, on obtient la transformation en matière zéolithique, d'au moins une partie de la ou des argile(s) zéolithisable(s) contenue(s) dans le liant. On constate alors que la zéolithisation permet notamment de renforcer la résistance mécanique des adsorbants zéolithiques agglomérés.

Selon ce mode opératoire et comme indiqué précédemment, on obtient aisément la zéolithisation d'au moins 50%, et de préférence d'au moins 70%, de préférence encore d'au moins 80% et de préférence encore d'au moins 85%, en poids de la ou des argile(s) zéolithisable(s) contenue(s) dans le liant. On procède ensuite à un lavage à l'eau suivi d'un séchage.

L'échange cationique réalisé à l'étape c) consiste à remplacer la totalité ou tout au moins la majeure partie des cations présents dans les sites échangeables du produit obtenu à l'étape b) par du lithium.

On entend par sites échangeables, l'ensemble des sites échangeables des cristaux de zéolithe(s) et ceux formés par la zéolithisation éventuelle du liant, de sorte que la teneur en lithium (exprimée en oxyde de lithium $Li_2O$) soit de préférence comprise entre 8% et 12% en poids, par rapport au poids total du matériau aggloméré zéolithique de la présente invention.

Les techniques possiblement utilisables pour effectuer cet échange cationique sont ici encore bien connues de l'homme du métier, et décrites par exemple dans le brevet EP0893157 et peuvent par exemple consister en une mise en contact, par exemple par immersion et agitation éventuelle, à des températures comprises entre environ 10°C et 90°C, de préférence entre 20°C et 80°C, du produit obtenu à l'étape b) avec une solution aqueuse de sel de lithium, avantageusement de chlorure de lithium. Cette opération peut être répétée une ou plusieurs fois, éventuellement avec des solutions aqueuses de sel de lithium de concentrations variables, afin de parvenir au taux d'échange souhaité, correspondant à la quantité de lithium, exprimé en quantité de $Li_2O$ présent dans le matériau aggloméré zéolithique, comme exprimé précédemment.

Outre l'échange avec des cations lithium, il est également possible de procéder à un échange avec un ou plusieurs autres cations des Groupes IA, IIA, IIIA et IIIB (respectivement colonnes 1, 2, 13 et 3) de la classification périodique des éléments, mais aussi avec un ou plusieurs autres ions trivalents de la série des lanthanides ou terres-rares, l'ion zinc (II), l'ion cuivrique (II), l'ion chromique (III), l'ion ferrique (III), l'ion ammonium et/ou l'ion hydronium.

L'opération de séchage est réalisée de manière classique, de préférence à une température généralement comprise entre 50°C et 200°C, par exemple à environ 120°C.

L'activation est également réalisée selon des procédés connus et a pour but de fixer la teneur en eau, ainsi que la perte au feu du matériau aggloméré zéolithique dans des limites optimales. On procède en général par activation thermique, généralement sous balayage gazeux oxydant et/ou inerte, avec notamment des gaz tels que l'oxygène, l'azote, l'air, un air sec et/ou décarbonaté, un air appauvri en oxygène, éventuellement sec et/ou décarbonaté à des températures supérieures à 200°C, typiquement comprises entre 250°C et 700°C, préférentiellement entre 300°C et 650°C. Cette activation thermique est conduite pendant quelques heures, par exemple entre 2 et 6 heures.

Le matériau aggloméré zéolithique selon la présente invention peut être utilisé dans de nombreuses applications, et peut être très avantageusement utilisé pour la séparation des gaz industriels ainsi que pour la séparation des gaz de l'air et notamment pour la production d'oxygène médical de haute pureté, et tout particulièrement dans des procédés modulés en pression, tels que par exemple les procédés VPSA $N_2/O_2$ industriel, PSA $N_2/O_2$ industriel, VPSA $N_2/O_2$ médical et PSA $N_2/O_2$ médical, entre autres.

Le matériau aggloméré zéolithique selon la présente invention présente le plus souvent une capacité d'adsorption massique d'azote ($N_2$), mesurée sous 1 bar à 25°C, supérieure à 20 $Ncm^3 g^{-1}$, de préférence supérieure à 22 $Ncm^3 g^{-1}$, de préférence encore supérieur à 24 $Ncm^3 g^{-1}$, de préférence supérieure à 25 $Ncm^3 g^{-1}$, de préférence encore supérieure à 26 $Ncm^3 g^{-1}$, de manière tout particulièrement préférée supérieure à 27 $Ncm^3 g^{-1}$.

Les procédés d'adsorption mettant en œuvre le matériau aggloméré zéolithique selon la présente invention sont le plus souvent de type PSA, VSA ou VPSA, et de préférence de type PSA ou VPSA pour la séparation $N_2/O_2$ des gaz industriels et pour la séparation $N_2/O_2$ dans les appareils de production d'oxygène médical.

Le matériau aggloméré zéolithique selon la présente invention trouve ainsi une application tout particulièrement intéressante en tant qu'élément d'adsorption dans les concentrateurs d'oxygène d'assistance respiratoire. Selon un aspect particulièrement avantageux de l'invention, le matériau aggloméré zéolithique selon l'invention constitue la matière active d'une cartouche consommable d'adsorbant zéolithique, insérable dans un concentrateur d'oxygène d'assistance respiratoire, qu'il soit transportable, mobile, de préférence portatif.

Ladite cartouche consommable d'adsorbant zéolithique comprenant au moins un matériau adsorbant zéolithique tel que défini précédemment fait également partie de la présente invention. Cette cartouche peut être de toute forme adaptée pour être facilement insérée et remplacée dans les concentrateurs d'oxygène d'assistance respiratoire. Selon un mode de réalisation ladite cartouche peut être préparée à partir du matériau aggloméré zéolithique selon l'invention sous forme de billes rendues cohésives entre elles grâce à au moins une résine, de préférence une résine polymère choisie parmi de préférence les homo- et/ou copolymères thermoplastiques et les polycondensats.

Des exemples non limitatifs de telles résines polymères sont les polyoléfines, notamment le polyéthylène basse et/ou haute et/ou ultra-haute densité, le polypropylène, les copolymères d'éthylène, les copolymères d'éthylène-acétate de vinyle, les polyacryliques, les homo- et/ou copolymères d'acrylonitrile, les polyacrylates, les polyméthacrylates, les copolymères d'acrylate et/ou les copolymères de méthacrylate, les polystyrènes et/ou les copolymères de styrène, les polyesters, p. ex. le polyéthylène téréphtalate, le polybutylène téréphtalate, les polymères et copolymères halogénés tels que les polymères de poly(difluorure de vinylidène) (PVDF), les polymères et/ou copolymères de poly(tétrafluoroéthylène) (PTFE), les polyamides, tels que le polyamide-11 et polyamide-12, ainsi que d'autres polyamides pairs et impairs, les polyamides aromatiques, les polychlorures de vinyle, les polyuréthanes, les polyéthersulfones, les polyéthercétones, les polycarbonates, les résines époxy, les résines phénoliques, les résines thermodurcissables et les résines élastomères, et analogues, ainsi que les mélanges de deux ou plusieurs d'entre elles en toutes proportions.

En variante, la cartouche consommable peut comprendre en outre ou à la place du matériau aggloméré zéolithique, un lit fixe de matériau aggloméré zéolithique selon l'invention.

Selon encore un autre aspect, l'invention concerne un concentrateur d'oxygène d'assistance respiratoire, transportable, mobile, de préférence portatif, comprenant au moins un matériau aggloméré zéolithique, ou au moins un lit fixe d'adsorption, ou au moins un matériau composite, ou au moins une cartouche, tels qu'ils viennent d'être décrits ci-dessus.

Il a été observé que le matériau aggloméré zéolithique selon la présente invention présente une meilleure efficacité volumique que les matériaux adsorbants disponibles aujourd'hui. Ce gain en efficacité volumique offre de nombreux avantages parmi lesquels un des principaux est de permettre une réduction de la taille des équipements, notamment des concentrateurs d'oxygène d'assistance respiratoire.

## Méthodes d'analyse

Les propriétés physiques du matériau aggloméré zéolithique selon l'invention sont évaluées par les méthodes connues de l'homme du métier, dont les principales d'entre elles sont rappelées ci-dessous.

L'estimation du diamètre moyen en nombre des cristaux de zéolithe qui sont utilisés pour la préparation du matériau aggloméré zéolithique de l'invention, est réalisée par observation au microscope électronique à balayage (MEB).

Afin d'estimer la taille des cristaux de zéolithe sur les échantillons, on effectue un ensemble de clichés à un grossissement d'au moins 5000. On mesure ensuite le diamètre d'au moins 200 cristaux à l'aide d'un logiciel dédié, par exemple le logiciel Smile View de l'éditeur LoGraMi. La précision est de l'ordre de 3%.

La taille retenue pour chaque cristal est celle de la plus grande section dudit cristal considéré. Les particules de taille inférieure à 0,5 μm qui pourraient éventuellement être présentes dans le matériau aggloméré zéolithique ne sont pas prises en considération dans le comptage.

La distribution granulométrique résultante équivaut à la moyenne des distributions granulométriques observées sur chacun des clichés. La largeur du pic et le diamètre moyen en nombre sont calculés selon les méthodes classiques connues de l'homme du métier, en appliquant les règles statistiques de distribution gaussienne.

Une analyse chimique élémentaire d'un matériau aggloméré zéolithique selon l'invention peut être réalisée selon différentes techniques analytiques connues de l'homme du métier. Parmi ces techniques, on peut citer la technique d'analyse chimique par fluorescence de rayons X telle que décrite dans la norme NF EN ISO 12677:2011 sur un spectromètre dispersif en longueur d'onde (WDXRF), par exemple Tiger S8 de la société Bruker.

La fluorescence X est une technique spectrale non destructive exploitant la photoluminescence des atomes dans le domaine des rayons X, pour établir la composition élémentaire d'un échantillon. L'excitation des atomes généralement par un faisceau de rayons X ou par bombardement avec des électrons, génère des radiations spécifiques après retour à l'état fondamental de l'atome. On obtient de manière classique après étalonnage pour chaque oxyde une incertitude de mesure inférieure à 0,4% en poids.

D'autres méthodes d'analyse sont par exemple illustrées par les méthodes par spectrométrie d'absorption atomique (AAS) et spectrométrie d'émission atomique avec plasma induit par haute fréquence (ICP-AES) décrites dans les normes NF EN ISO 21587-3 ou NF EN ISO 21079-3 sur un appareil de type par exemple Perkin Elmer 4300DV.

Le spectre de fluorescence X a l'avantage de dépendre très peu de la combinaison chimique de l'élément, ce qui offre une détermination précise, à la fois quantitative et qualitative. On obtient de manière classique après étalonnage pour chaque oxyde $SiO_2$ et $Al_2O_3$, ainsi que les différents oxydes (tels que ceux provenant des cations échangeables, par exemple sodium), une incertitude de mesure inférieure à 0,4% en poids. La méthode ICP-AES est particulièrement adaptée pour mesurer la teneur en lithium qui permet de calculer la teneur en oxyde de lithium.

Ainsi, les analyses chimiques élémentaires décrites ci-dessus permettent à la fois de vérifier le ratio Si/Al de la zéolithe utilisée au sein du matériau aggloméré zéolithique et le ratio Si/Al du matériau aggloméré zéolithique. Dans la description de la présente invention, l'incertitude de mesure du ratio Si/Al est de ± 5%. La mesure du ratio Si/Al de la zéolithe présente dans le matériau aggloméré peut également être mesurée par spectroscopie de Résonance Magnétique Nucléaire (RMN) solide du silicium.

La qualité de l'échange ionique est liée au nombre de moles du cation considéré dans le matériau aggloméré zéolithique après échange. Plus précisément, le taux d'échange par un cation donné est estimé en évaluant le rapport entre le nombre de moles dudit cation et le nombre de moles de l'ensemble des cations échangeables. Les quantités respectives de chacun des cations sont évaluées par analyse chimique des cations correspondants. Par exemple, le taux d'échange par les ions sodium est estimé en évaluant le rapport entre le nombre total de cation $Na^+$ et le nombre total de cations échangeables (par exemple $Ca^{2+}$, $K^+$, $Li^+$, $Ba^{2+}$, $Cs^+$, $Na^+$, etc.), la quantité de chacun des cations étant évaluée par analyse chimique des oxydes correspondants ($Na_2O$, $CaO$, $K_2O$, $BaO$, $Li_2O$, $Cs_2O$, etc.). Cette méthode de calcul comptabilise également les éventuels oxydes présents dans le liant résiduel du matériau aggloméré zéolithique.

La résistance à l'écrasement en lit des matériaux adsorbants zéolithiques tels que décrits dans la présente invention est caractérisée selon la norme ASTM 7084-04.

La masse volumique apparente du matériau aggloméré zéolithique selon la présente invention est mesurée comme décrit dans la norme DIN 8948/7.6.

La pureté des zéolithes dans les matériaux adsorbants zéolithiques de l'invention est évaluée par analyse de diffraction aux rayons X, connue de l'homme du métier sous l'acronyme DRX. Cette identification est réalisée sur un appareil DRX de la marque Bruker.

Cette analyse permet d'identifier les différentes zéolithes présentes dans le matériau aggloméré car chacune des zéolithes possède un diffractogramme unique défini par le positionnement des pics de diffraction et par leurs intensités relatives.

Les matériaux adsorbants zéolithiques sont broyés puis étalés et lissés sur un porte échantillon par simple compression mécanique Les conditions d'acquisition du diffractogramme réalisé sur l'appareil D8 ADVANCE de Bruker sont les suivantes :

- tube Cu utilisé à 40 kV - 30 mA ;
- taille des fentes de Soller = 2,5°, avec une largeur du surface d'irradiation de 16 mm ;
- dispositif d'échantillon tournant : 10 tr.min$^{-1}$ ;
- plage de mesure : 4° < 2$\theta$ < 70° ;
- pas : 0,015° ;
- temps de comptage par pas : 0,8 secondes.

L'interprétation du diffractogramme obtenu s'effectue avec le logiciel EVA avec identification des zéolithes à l'aide de la base ICDD PDF-2, release 2011.

La quantité des fractions zéolithiques FAU, en poids, est mesurée par analyse par DRX, cette méthode est également utilisée pour mesurer la quantité des fractions zéolithiques autres que FAU. Cette analyse est réalisée sur un appareil de la marque Bruker, puis la quantité en poids des fractions zéolithiques est évaluée au moyen du logiciel TOPAS de la société Bruker.

La capacité massique d'adsorption à 25°C, sous 1 bar, du matériau aggloméré zéolithique est déterminée à partir de la mesure de l'isotherme d'adsorption de gaz, tels que l'azote ou l'oxygène, à 25°C.

Préalablement à l'adsorption, le matériau aggloméré zéolithique est dégazé entre 300°C et 450°C pendant une durée comprise entre 9 heures et 16 heures, sous vide (Pression inférieure à $6,7.10^{-4}$ Pa). La mesure des isothermes d'adsorption est ensuite effectuée sur un appareil de type ASAP 2020 de Micromeritics, en prenant au moins 10 points de mesure à des pressions relatives de rapport P/P0 compris entre 0,001 et 1.

La capacité massique d'adsorption du matériau aggloméré zéolithique est lue sur l'isotherme à 25°C, sous une pression de 1 bar, et exprimée en Ncm$^3$ g$^{-1}$.

La capacité volumique d'adsorption à 25°C, sous 1 bar, du matériau aggloméré zéolithique se calcule à partir de la capacité massique d'adsorption telle que définie ci-dessus et en multipliant ladite capacité massique d'adsorption par la masse volumique apparente dudit matériau aggloméré zéolithique. La masse volumique apparente est mesurée comme décrit dans la norme DIN 8948/7.6.

La détermination du diamètre volumique moyen (ou « diamètre moyen en volume ») du matériau aggloméré zéolithique de l'invention est effectuée par analyse de la distribution granulométrique d'un échantillon de matériau adsorbant par imagerie selon la norme ISO 13322-2:2006, en utilisant un tapis roulant permettant à l'échantillon de passer devant l'objectif de la caméra.

Le diamètre moyen en volume est ensuite calculé à partir de la distribution granulométrique en appliquant la norme ISO 9276-2:2001. Dans le présent document, on emploie l'appellation « diamètre moyen en volume » ou bien « taille » pour les matériaux adsorbants zéolithiques. La précision est de l'ordre de 0,01 mm pour la gamme de taille des matériaux adsorbants zéolithiques de la présente invention.

La présente invention est maintenant décrite à l'aide des exemples qui suivent et qui ont pour but d'illustrer certains modes de réalisation de l'invention, sans toutefois limiter la portée de ladite invention telle qu'elle est revendiquée dans les revendications annexées.

**Exemple 1 (comparatif)** : préparation d'un matériau aggloméré zéolithique avec des cristaux de zéolithe LSX de d$_{50}$ = 1,3 $\mu$m

Dans ce qui suit les masses données sont exprimées en équivalents calcinés.

On prépare un mélange homogène constitué de 1700 g de cristaux de zéolithe LSX de d$_{50}$ = 1,3 $\mu$m, telle que décrite dans FR2925478, avec un taux de cisaillement de 135 s$^{-1}$, de 300 g de kaolinite des Charentes, ainsi que de la quantité d'eau telle que la perte au feu de la pâte avant mise en forme est de 39%. On utilise la pâte ainsi préparée pour réaliser des billes de matériau aggloméré zéolithique.

Une sélection par tamisage des billes obtenues est réalisée de façon à recueillir des billes de diamètre compris entre 0,3 mm et 0,8 mm et de diamètre volumique moyen égal à 0,50 mm.

Les billes sont séchées une nuit en étuve ventilée à 80°C. Elles sont ensuite calcinées pendant 2 h à 550°C sous balayage à l'air sec décarbonaté. Après refroidissement, 100 g de ces billes (agglomérés) sont immergés dans 750 mL de solution aqueuse d'hydroxyde de sodium de concentration 100 g L$^{-1}$, à une température régulée à 98°C. Le système est maintenu en température sous une agitation douce pendant 3 heures. Les agglomérés sont ensuite lavés à l'eau jusqu'à ce que le pH final des eaux de lavage soit proche de 10.

On procède ensuite à cinq échanges successifs au moyen de solutions de chlorure de lithium 1 M, à raison de 20 mL g$^{-1}$ de solide. Chaque échange est poursuivi pendant 4 heures à 100°C, et des lavages intermédiaires sont effectués, permettant ainsi d'éliminer l'excès de sel à chaque étape. À l'étape finale, quatre lavages sont effectués à température ambiante, à raison de 20 mL g$^{-1}$. Les billes sont séchées une nuit en étuve ventilée à 80°C. Elles sont ensuite activées pendant 2 heures à 550°C sous balayage à l'air sec décarbonaté.

La teneur en oxyde de lithium $Li_2O$, déterminée par ICP-AES, est de 10,6% en poids par rapport au poids total du matériau aggloméré zéolithique. Le diamètre médian des billes reste inchangé et est de 0,50 mm. La résistance mécanique à l'écrasement en lit des billes de zéolithe LSX échangée au lithium est de 1,4 MPa, la masse volumique apparente est de 0,58 kg m$^{-3}$, le rapport Si/Al du matériau zéolithique est égal à 1,02, la PNZ est égale à 3%

La capacité massique d'adsorption à 25°C, sous 1 bar, est égale à 24,7 Ncm$^3$ g$^{-1}$. Le ratio diamètre volumique moyen des billes / diamètre moyen en nombre des cristaux de LSX est de 385.

**Exemple 2 (comparatif)** : préparation d'un matériau aggloméré zéolithique avec des cristaux de LSX de $d_{50}$ = 5,6 $\mu$m

Des cristaux de zéolithe LSX de $d_{50}$ = 5,6 $\mu$m, sont préparés comme décrit dans l'exemple comparatif 1 ci-dessus avec cependant un taux de cisaillement de 5 s$^{-1}$. On prépare un mélange homogène constitué de 1700 g de ces cristaux de zéolithe LSX de $d_{50}$ = 5,6 $\mu$m, avec 300 g de kaolinite des Charentes, de 40 g (en équivalents calcinés) de silice colloïdale commercialisée sous la dénomination Klebosol® 30, ainsi que de la quantité d'eau telle que la perte au feu de la pâte avant mise en forme est de 39%.

Le matériau aggloméré zéolithique est ensuite préparé selon le protocole décrit dans l'exemple 1 comparatif ci-dessus.

La teneur en oxyde de lithium $Li_2O$, déterminée par ICP-AES, est de 10,7% en poids par rapport au poids total du matériau aggloméré zéolithique. Le diamètre moyen en volume des billes est de 0,50 mm. La résistance mécanique à l'écrasement en lit (REL) des billes de zéolithe LSX échangée au lithium est de 2,6 MPa, la masse volumique apparente est de 0,63 kg m$^{-3}$, le rapport Si/Al du matériau zéolithique est égal à 1,03, la PNZ est égale à 2,7%.

La capacité massique d'adsorption à 25°C, sous 1 bar, est égale à 27 Ncm$^3$ g$^{-1}$. Le ratio diamètre volumique moyen des billes / diamètre moyen en nombre des cristaux de LSX est de 90.

**Exemple 3 (invention)** : préparation d'un matériau aggloméré zéolithique avec des cristaux de LSX de $d_{50}$ = 5,6 $\mu$m et de ratio diamètre des billes / diamètres des cristaux de LSX = 62

On prépare des cristaux de zéolithe LSX de $d_{50}$ = 5,6 $\mu$m comme décrit dans l'exemple comparatif 2 ci-dessus. On prépare ensuite un mélange homogène constitué de 1700 g de cristaux de zéolithe LSX de $d_{50}$ = 5,6 $\mu$m, de 300 g d'attapulgite Zeoclay®, ainsi que de la quantité d'eau telle que la perte au feu de la pâte avant mise en forme est de 39%.

On utilise la pâte ainsi préparée afin de réaliser des billes de matériau aggloméré zéolithique.

Une sélection par tamisage des billes obtenues est réalisée de façon à recueillir des billes de diamètre compris entre 0,10 mm et 0,50 mm et de diamètre volumique moyen égal à 0,35 mm.

Les billes sont séchées une nuit en étuve ventilée à 80°C. Elles sont ensuite calcinées pendant 2 h à 550°C sous balayage à l'air sec décarbonaté.

L'échange cationique au lithium est réalisé ensuite par cinq échanges successifs au moyen de solutions de chlorure de lithium 1 M, à raison de 20 mL g$^{-1}$ de solide. Chaque échange est poursuivi pendant 4 heures à 100°C, et des lavages intermédiaires sont effectués, permettant ainsi d'éliminer l'excès de sel à chaque étape. À l'étape finale, quatre lavages sont effectués à température ambiante, à raison de 20 mL g$^{-1}$.

Les billes sont séchées une nuit en étuve ventilée à 80°C. Elles sont ensuite activées pendant 2 heures à 550°C sous balayage à l'air sec décarbonaté.

La teneur en oxyde de lithium $Li_2O$, déterminée par ICP-AES, est de 8,9% en poids par rapport au poids total du matériau aggloméré zéolithique. Le diamètre moyen en volume des billes est de 0,35 mm. La résistance mécanique à l'écrasement en lit (REL) des billes de zéolithe LSX échangée au lithium est de 2,1 MPa, la masse volumique apparente est de 0,63 kg.m$^{-3}$, le rapport Si/Al du matériau zéolithique est égal à 1,25, la PNZ est égale à 17%.

La capacité massique d'adsorption à 25°C, sous 1 bar, est égale à 21 Ncm$^3$ g$^{-1}$. Le ratio diamètre volumique moyen des billes / diamètre moyen en nombre des cristaux de LSX est de 62.

**Exemple 4 (invention)** : préparation d'un matériau aggloméré zéolithique avec des cristaux de LSX de $d_{50}$ = 7 $\mu$m et de ratio diamètre des billes / diamètres des cristaux de LSX = 43

Des cristaux de zéolithe LSX de $d_{50}$ = 7 $\mu$m, sont préparés comme décrit dans l'exemple comparatif 1 ci-dessus avec cependant un taux de cisaillement de 2,5 s$^{-1}$. On prépare un mélange homogène constitué de 1700 g de ces cristaux de zéolithe LSX de $d_{50}$ = 7 $\mu$m, avec 300 g d'attapulgite Zeoclay®, ainsi que de la quantité d'eau telle que la perte au feu de la pâte avant mise en forme est de 39%. On utilise la pâte ainsi préparée pour réaliser des billes de matériau aggloméré zéolithique.

Une sélection par tamisage des billes obtenues est réalisée de façon à recueillir des billes de diamètre compris entre 0,10 mm et 0,50 mm et de diamètre volumique moyen égal à 0,30 mm.

Les billes sont séchées une nuit en étuve ventilée à 80°C. Elles sont ensuite calcinées pendant 2 h à 550°C sous balayage à l'air sec décarbonaté.

L'échange cationique au lithium est réalisé ensuite par cinq échanges successifs au moyen de solutions de chlorure de lithium 1 M, à raison de 20 mL g$^{-1}$ de solide. Chaque échange est poursuivi pendant 4 heures à 100°C et des lavages intermédiaires sont effectués, permettant ainsi d'éliminer l'excès de sel à chaque étape. À l'étape finale, quatre lavages sont effectués à température ambiante, à raison de 20 mL g$^{-1}$.

Les billes sont séchées une nuit en étuve ventilée à 80°C. Elles sont ensuite activées pendant 2 heures à 550°C sous balayage à l'air sec décarbonaté.

La teneur en oxyde de lithium $Li_2O$, déterminée par ICP-AES, est de 9,2% en poids par rapport au poids total du matériau aggloméré zéolithique. Le diamètre moyen en volume des billes est de 0,30 mm. La résistance mécanique à l'écrasement en lit (REL) des billes de zéolithe LSX échangée au lithium est de 2,1 MPa, la masse volumique apparente est de 0,63 kg m$^{-3}$, le rapport Si/Al du matériau zéolithique est égal à 1,25, la PNZ est égale à 17%.

La capacité massique d'adsorption à 25°C, sous 1 bar, est égale à 22 Ncm$^3$ g$^{-1}$. Le ratio diamètre volumique moyen des billes / diamètre moyen en nombre des cristaux de LSX est de 43.

**Exemple 5 (invention)** : préparation d'un matériau aggloméré zéolithique avec des cristaux de LSX de d$_{50}$ = 6,5 $\mu$m et de ratio diamètre des billes / diamètres des cristaux de LSX = 38

Des cristaux de zéolithe LSX de d$_{50}$ = 6,5 $\mu$m, sont préparés comme décrit dans l'exemple comparatif 1 ci-dessus avec cependant un taux de cisaillement de 3 s$^{-1}$. On prépare un mélange homogène constitué de 1700 g de ces cristaux de zéolithe LSX de d$_{50}$ = 6,5 $\mu$m, avec 300 g de kaolinite des Charentes, de 40 g (en équivalents calcinés) de silice colloïdale commercialisée sous la dénomination Klebosol® 30, ainsi que de la quantité d'eau telle que la perte au feu de la pâte avant mise en forme est de 39%.

Le matériau aggloméré zéolithique est ensuite préparé selon le protocole décrit dans l'exemple 1 comparatif ci-dessus.

La teneur en oxyde de lithium $Li_2O$, déterminée par ICP-AES, est de 10,2% en poids par rapport au poids total du matériau aggloméré zéolithique. Le diamètre moyen en volume des billes est de 0,25 mm. La résistance mécanique à l'écrasement en lit (REL) des billes de zéolithe LSX échangée au lithium est de 2,2 MPa, la masse volumique apparente est de 0,65 kg m$^{-3}$, le rapport Si/Al du matériau zéolithique est égal à 1,05, la PNZ est égale à 2,8%.

La capacité massique d'adsorption à 25°C, sous 1 bar, est égale à 26 Ncm$^3$ g$^{-1}$. Le ratio diamètre volumique moyen des billes / diamètre moyen en nombre des cristaux de LSX est de 38.

**Exemple 6 :** détermination de la hauteur de colonne pour obtenir une pureté d'oxygène de 95%

On réalise un test de séparation $N_2/O_2$ sur deux lits fixes d'adsorbant avec modulation de l'adsorption en pression (PSA).

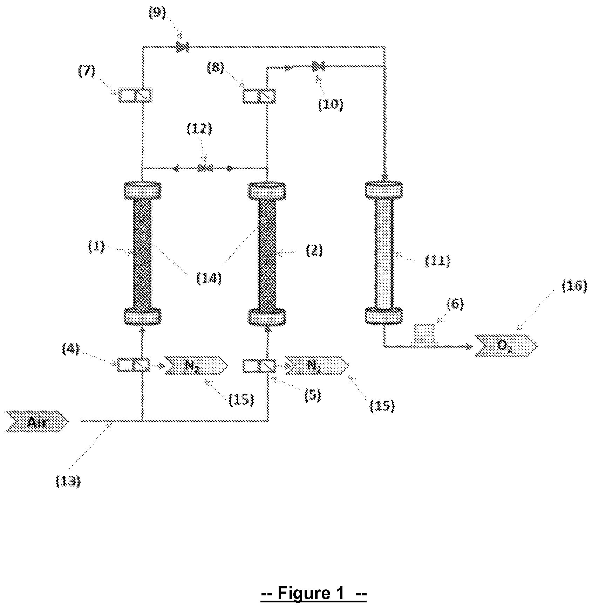

La **Figure 1** décrit le montage réalisé. Deux colonnes (1) et (2) de diamètres intérieurs égaux à 6 cm et de hauteurs intérieures égales, remplies de matériau aggloméré zéolithique (14), sont alimentées en air sec (13) et dépressurisées par intermittence au moyen de vannes (4) et (5). On dispose de différents jeux de colonnes de hauteurs différentes. Le Tableau 1 indique l'état respectif des vannes en fonction des phases d'adsorption et de désorption.

-- **Tableau 1** --

| Phase d'adsorption colonne (1) | Phase de désorption colonne (2) | Phase de désorption colonne (1) | Phase d'adsorption colonne (2) |
|---|---|---|---|
| Vanne (4) ouverte Vanne (7) ouverte | Vanne (5) fermée Vanne (8) fermée | Vanne (4) fermée Vanne (7) fermée | Vanne (5) ouverte Vanne (8) ouverte |

Quand une colonne (1 ou 2) est alimentée en air sec, le flux (13) passe au travers des colonnes et par conséquent au travers du matériau aggloméré zéolithique (14). Ledit matériau aggloméré zéolithique adsorbe préférentiellement l'azote, si bien qu'un air enrichi en oxygène sort de la colonne par la vanne (7 ou 8) puis traverse un clapet anti-retour (9 ou 10) et est dirigé vers une capacité tampon (11). Une vanne régulatrice (6) délivre en continu le gaz en sortie (16) à un débit constant fixé à 5 NL min$^{-1}$.

Quand la colonne (1 ou 2) n'est pas alimentée, elle est dépressurisée par l'ouverture de la vanne (4 ou 5) à l'atmosphère (15), ce qui correspond au mode « vanne fermée », ce qui permet à l'azote d'être désorbé. Les phases d'adsorption et de désorption se succèdent les unes aux autres. Les durées de ces phases sont fixes d'un cycle à l'autre et elles sont réglables.

La vanne 12 est une vanne de purge. Elle est ouverte en permanence de façon à permettre la désorption de l'azote avec une partie de l'oxygène produit par la colonne en adsorption. Le temps d'alimentation de la colonne (1 ou 2) par le flux (13) est appelé temps d'adsorption.

Le test est ainsi réalisé en continu en alternant phase d'adsorption et désorption. La durée des cycles de chaque phase (adsorption/désorption) varie de 0,5 s à 15 s, cette durée étant adaptée à la dimension des colonnes.

Les dimensions des colonnes sont déterminées de façon à obtenir une concentration en oxygène en sortie de 95%. La concentration en oxygène en sortie (16) est mesurée au moyen d'un analyseur d'oxygène Servomex 570A. Les résultats du test sont présentés dans le tableau suivant :

-- **Tableau 2** --

| Echantillon | Ratio bille/cristaux | hauteur de colonne (en cm) |
|---|---|---|
| Exemple 1 comp. | 385 | 33 |
| Exemple 2 comp. | 90 | 29,5 |
| Exemple 3 | 62 | 15 |
| Exemple 4 | 43 | 13 |
| Exemple 5 | 38 | 10 |

**Revendications**

1. Matériau aggloméré zéolithique sous forme de particule d'aggloméré zéolithique :

   - comprenant au moins une zéolithe et au moins un liant,
   - comprenant au moins des cristaux de zéolithe de type FAU,
   - ledit matériau présentant un rapport atomique Si/Al compris entre 1 et 2,5, de préférence entre 1 et 2,0, de préférence encore entre 1 et 1,8, et de manière tout à fait préférée, entre 1 et 1,6, mesuré par fluorescence X, avec une incertitude de mesure de $\pm$ 0,05, et
   - ledit matériau aggloméré zéolithique présentant un ratio diamètre volumique moyen de ladite particule d'aggloméré zéolithique par rapport au diamètre moyen en nombre des cristaux de zéolithe inférieur ou égal à 70,
   - dont le diamètre volumique moyen de ladite particule d'aggloméré zéolithique est compris entre 20 $\mu$m et 400 $\mu$m, de manière préférée compris entre 50 $\mu$m et 380 $\mu$m, bornes incluses, calculé selon la norme ISO 9276-2:2001 à partir de la distribution granulométrique déterminée par imagerie selon la norme ISO 13322-2:2006, et
   - dans lequel les cristaux de zéolithe présentent un diamètre moyen en nombre ($d_{50}$) par observation au microscope électronique à balayage à un grossissement d'au moins 5000 selon la description, compris entre 5,0 $\mu$m et 20,0 $\mu$m, de préférence compris entre 5,0 $\mu$m et 15,0 $\mu$m.

2. Matériau aggloméré zéolithique selon la revendication 1, présentant une teneur en lithium, exprimée en poids de $Li_2O$, comprise entre 8,0% et 12,0% en poids, bornes incluses, de préférence entre 9,0% et 12,0%, bornes incluses, de préférence encore entre 10% et 12,0% en poids, bornes incluses, par rapport au poids total du matériau aggloméré zéolithique.

3. Matériau selon l'une quelconque des revendications précédentes, dans lequel la quantité de phase non zéolithique PNZ est telle que 0 < PNZ $\leq$ 25%, de préférence 0 < PNZ $\leq$ 20%, de préférence encore 0 < PNZ $\leq$ 15%, avantageusement 0 < PNZ $\leq$ 10%, encore plus avantageusement 0 < PNZ $\leq$ 8%, mesurée par diffraction des rayons X (DRX), en poids par rapport au poids total du matériau aggloméré zéolithique.

4. Matériau selon l'une quelconque des revendications précédentes, présentant une masse volumique apparente comprise entre 0,50 kg m$^{-3}$ et 0,80 kg m$^{-3}$, de préférence comprise entre 0,55 kg m$^{-3}$ et 0,75 kg m$^{-3}$, de préférence encore comprise entre 0,60 kg m$^{-3}$ et 0,70 kg m$^{-3}$.

5. Procédé de préparation du matériau adsorbant zéolithique selon l'une quelconque des revendications 1 à 4, comprenant les étapes suivantes :

a) agglomération de cristaux de zéolithe, avec un liant d'agglomération, contenant de préférence au moins 80% en poids d'argile(s), mise en forme, séchage et calcination,
b) zéolithisation éventuelle d'au moins une partie du liant,
c) échange cationique,
d) séchage éventuel et
e) activation du matériau aggloméré zéolithique obtenu.

6. Procédé selon la revendication 5, dans lequel l'éventuelle étape de zéolithisation est effectuée par immersion de l'aggloméré dans une solution basique alcaline, en général aqueuse, par exemple une solution aqueuse d'hydroxyde de sodium et/ou d'hydroxyde de potassium, dont la concentration est de préférence supérieure à 0,5 M.

7. Utilisation du matériau selon l'une quelconque des revendications 1 à 4 en tant que matériau adsorbant d'azote pour la séparation des gaz industriels ainsi que pour la séparation des gaz de l'air et notamment pour la production d'oxygène médical de haute pureté, et tout particulièrement dans des procédés modulés en pression, tels que par exemple les procédés VPSA $N_2/O_2$ industriel, PSA $N_2/O_2$ industriel, VPSA $N_2/O_2$ médical et PSA $N_2/O_2$ médical.

8. Utilisation selon la revendication 7, en tant qu'élément d'adsorption dans les concentrateurs d'oxygène d'assistance respiratoire.

9. Cartouche consommable d'adsorbant zéolithique comprenant au moins un matériau adsorbant zéolithique selon l'une quelconque des revendications 1 à 4.

10. Cartouche selon la revendication 9, comprenant en outre au moins une résine, de préférence une résine polymère choisie parmi de préférence les homo-et/ou co-polymères thermoplastiques et les polycondensats.

11. Concentrateur d'oxygène d'assistance respiratoire, transportable, mobile, de préférence portatif, comprenant au moins un matériau adsorbant zéolithique selon l'une quelconque des revendications 1 à 4.

**Patentansprüche**

1. Zeolithisches agglomeriertes Material in Form von Zeolithagglomeratteilchen:

- umfassend mindestens einen Zeolith und mindestens ein Bindemittel,
- umfassend mindestens Kristalle von Zeolith vom FAU-Typ,
- wobei das Material ein Si/Al-Atomverhältnis zwischen 1 und 2,5, bevorzugt zwischen 1 und 2,0, weiter bevorzugt zwischen 1 und 1,8 und ganz besonders bevorzugt zwischen 1 und 1,6, gemessen mittels Röntgenfluoreszenz mit einer Messunsicherheit von $\pm$ 0,05, aufweist und
- wobei das zeolithische agglomerierte Material ein Verhältnis von volumenmittlerem Durchmesser des Zeolithagglomeratteilchens zu zahlenmittlerem Durchmesser der Zeolithkristalle kleiner oder gleich 70 aufweist,
- wobei der volumenmittlere Durchmesser des Zeolithagglomeratteilchens zwischen 20 $\mu$m und 400 $\mu$m, vorzugsweise zwischen 50 $\mu$m und 380 $\mu$m, Grenzwerte eingeschlossen, berechnet gemäß ISO-Norm 9276-2:2001 aus der durch Bildverarbeitung gemäß ISO-Norm 13322-2:2006 bestimmten Teilchengrößenverteilung, liegt und
- wobei die Zeolithkristalle einen zahlenmittleren Durchmesser ($d_{50}$) gemäß rasterelektronenmikroskopischer Beobachtung bei einer Vergrößerung von mindestens 5000 gemäß der Beschreibung zwischen 5,0 $\mu$m und 20,0 $\mu$m, vorzugsweise zwischen 5,0 $\mu$m und 15,0 $\mu$m, aufweisen.

2. Zeolithisches agglomeriertes Material nach Anspruch 1, mit einem Lithiumgehalt, ausgedrückt als Gewicht an $Li_2O$, zwischen 8,0 und 12,0 Gew.-%, Grenzen eingeschlossen, bevorzugt zwischen 9,0 und 12,0 %, Grenzen eingeschlossen, weiter bevorzugt zwischen 10 und 12,0 Gew.-%, Grenzen eingeschlossen, bezogen auf das Gesamtgewicht des zeolithischen agglomerierten Materials.

3. Material nach einem der vorhergehenden Ansprüche, wobei die Menge an nichtzeolithischer Phase NZP derart ist, dass $0 < NZP \leq 25$ Gew.-%, bevorzugt $0 < NZP \leq 20$ Gew.-%, weiter bevorzugt $0 < NZP \leq 15$ Gew.-%, vorteilhafterweise $0 < NZP \leq 10$ Gew.-%, noch vorteilhafter $0 < NZP \leq 8$ Gew.-%, gemessen durch Röntgenbeugung (XRD), bezogen auf das Gesamtgewicht des zeolithischen agglomerierten Materials.

**4.** Material nach einem der vorhergehenden Ansprüche mit einer Schüttdichte zwischen 0,50 kg m$^{-3}$ und 0,80 kg m$^{-3}$, bevorzugt zwischen 0,55 kg m$^{-3}$ und 0,75 kg m$^{-3}$, weiter bevorzugt zwischen 0,60 kg m$^{-3}$ und 0,70 kg m$^{-3}$.

**5.** Verfahren zur Herstellung des zeolithischen Adsorptionsmaterials nach einem der Ansprüche 1 bis 4, umfassend die folgenden Schritte:

> a) Agglomeration von Zeolithkristallen mit einem Agglomerationsbinder, der bevorzugt mindestens 80 Gew.-% Ton(e) enthält, Formung, Trocknung und Calcinierung,
> b) gegebenenfalls Zeolithisierung mindestens eines Teils des Bindemittels,
> c) Kationenaustausch,
> d) gegebenenfalls Trocknung und
> e) Aktivierung des erhaltenen zeolithischen agglomerierten Materials.

**6.** Verfahren nach Anspruch 5, bei dem der fakultative Zeolithisierungsschritt durch Eintauchen des Agglomerats in eine alkalische basische, im Allgemeinen wässrige, Lösung, beispielsweise eine wässrige Lösung von Natriumhydroxid und/oder Kaliumhydroxid, deren Konzentration vorzugsweise größer als 0,5 M ist, durchgeführt wird.

**7.** Verwendung des Materials nach einem der Ansprüche 1 bis 4 als Stickstoffadsorptionsmaterial zur Trennung von technischen Gasen sowie zur Trennung von Gasen aus der Luft und insbesondere zur Herstellung von hochreinem medizinischem Sauerstoff und ganz besonders in Druckwechselverfahren, wie beispielsweise VPSA-Verfahren für technisches $N_2/O_2$, PSA-Verfahren für technisches $N_2/O_2$, VPSA-Verfahren für medizinisches $N_2/O_2$ und PSA-Verfahren für medizinisches $N_2/O_2$.

**8.** Verwendung nach Anspruch 7 als Adsorptionselement in Sauerstoffkonzentratoren zur Beatmung.

**9.** Verbrauchbare Kartusche von zeolithischem Adsorptionsmittel, umfassend mindestens ein zeolithisches Adsorptionsmaterial nach einem der Ansprüche 1 bis 4.

**10.** Kartusche nach Anspruch 9, ferner umfassend mindestens ein Harz, vorzugsweise ein Polymerharz, das bevorzugt aus thermoplastischen Homo- und/oder Copolymeren und Polykondensaten ausgewählt ist.

**11.** Transportabler, mobiler, vorzugsweise tragbarer, Sauerstoffkonzentrator zur Beatmung, der mindestens ein zeolithisches Adsorptionsmaterial nach einem der Ansprüche 1 bis 4 umfasst.

## Claims

**1.** Zeolitic agglomerated material in the form of a zeolite agglomerate particle:

> - comprising at least one zeolite and at least one binder,
> - comprising at least FAU-type zeolite crystals,
> - said material having an Si/Al atomic ratio of between 1 and 2.5, preferably between 1 and 2.0, more preferably between 1 and 1.8, and entirely preferably between 1 and 1.6, measured by X-ray fluorescence, with a measurement uncertainty of $\pm$ 0.05, and
> - said zeolitic agglomerated material having a ratio of the volume-average diameter of said zeolite agglomerate particle relative to the number-average diameter of the zeolite crystals less than or equal to 70,
> - of which the volume-average diameter of said zeolite agglomerate particle is between 20 $\mu$m and 400 $\mu$m, preferably between 50 $\mu$m and 380 $\mu$m, limits included, calculated according to the ISO 9276-2:2001 standard from the particle size distribution determined by imaging according to the ISO 13322-2:2006 standard, and
> - wherein the zeolite crystals have a number-average diameter ($d_{50}$) by observation under the scanning electron microscope at a magnification of at least 5000 according to the description, of between 5.0 $\mu$m and 20.0 $\mu$m, preferably between 5.0 $\mu$m and 15.0 $\mu$m.

**2.** Zeolitic agglomerated material according to Claim 1, having a lithium content, expressed by weight of $Li_2O$, of between 8.0% and 12.0% by weight, limits included, preferably between 9.0% and 12.0%, limits included, more preferably between 10% and 12.0% by weight, limits included, relative to the total weight of the zeolitic agglomerated material.

**3.** Material according to either one of the preceding claims, wherein the amount of non-zeolite phase NZP is such that 0 <

$NZP \leq 25\%$, preferably $0 < NZP \leq 20\%$, more preferably $0 < NZP \leq 15\%$, advantageously $0 < NZP \leq 10\%$, even more advantageously $0 < NZP \leq 8\%$, measured by X-ray diffraction (XRD), by weight relative to the total weight of the zeolitic agglomerated material.

4. Material according to any one of the preceding claims, having a bulk density of between $0.50$ kg.m$^{-3}$ and $0.80$ kg.m$^{-3}$, preferably of between $0.55$ kg.m$^{-3}$ and $0.75$ kg.m$^{-3}$, more preferably of between $0.60$ kg.m$^{-3}$ and $0.70$ kg.m$^{-3}$.

5. Process for preparing the zeolitic adsorbent material according to any one of Claims 1 to 4, comprising the following steps:

   a) agglomeration of zeolite crystals, with an agglomeration binder, preferably containing at least 80% by weight of clay(s), shaping, drying and calcining,
   b) optional zeolitization of at least a portion of the binder,
   c) cationic exchange,
   d) optional drying and
   e) activation of the zeolitic agglomerated material obtained.

6. Process according to Claim 5, wherein the optional zeolitization step is carried out by immersing the agglomerate in an alkaline basic solution, which is generally aqueous, for example an aqueous solution of sodium hydroxide and/or of potassium hydroxide, the concentration of which is preferably greater than 0.5 M.

7. Use of the material according to any one of Claims 1 to 4 as a nitrogen adsorbent material for the separation of industrial gases and also for the separation of gases from the air and in particular for the production of high-purity medical oxygen, and most particularly in pressure swing processes, such as, for example, the industrial $N_2/O_2$ VPSA, industrial $N_2/O_2$ PSA, medical $N_2/O_2$ VPSA and medical $N_2/O_2$ PSA processes.

8. Use according to Claim 7, as an adsorption element in oxygen concentrators for respiratory assistance.

9. Consumable cartridge of zeolitic adsorbent, comprising at least one zeolitic adsorbent material according to any one of Claims 1 to 4.

10. Cartridge according to Claim 9, further comprising at least one resin, preferably a polymeric resin selected preferably from thermoplastic homopolymers and/or copolymers, and polycondensates.

11. Oxygen concentrator for respiratory assistance, which is transportable, mobile, preferably portable, comprising at least one zeolitic adsorbent material according to any one of Claims 1 to 4.

**-- Figure 1 --**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3140931 A
- US 3140933 A
- WO 2018100318 A
- US 20120227584 A
- FR 2766476
- WO 2014176002 A
- US 20130340612 A
- FR 2925478
- US 5464467 A
- EP 0893157 A